## Europäisches Patentamt

## European Patent Office

## Office européen des brevets

(19)

(11) Veröffentlichungsnummer : **0 110 087 B1**

(12) **EUROPÄISCHE PATENTSCHRIFT**

(45) Veröffentlichungstag der Patentschrift :
16.04.86

(51) Int. Cl.⁴ : **C 08 F210/16, C 08 F 2/34**

(21) Anmeldenummer : **83110330.4**

(22) Anmeldetag : **17.10.83**

(54) **Verfahren zum kontinuierlichen Herstellen von Copolymerisaten des Ethylens mit höheren alpha-Monoolefinen.**

(30) Priorität : **28.10.82 DE 3239884**

(43) Veröffentlichungstag der Anmeldung :
**13.06.84 Patentblatt 84/24**

(45) Bekanntmachung des Hinweises auf die Patenterteilung : **16.04.86 Patentblatt 86/16**

(84) Benannte Vertragsstaaten :
**BE DE FR GB IT NL**

(56) Entgegenhaltungen :
**DE-A- 1 817 580**
**DE-A- 3 048 437**
**DE-B- 1 071 338**

(73) Patentinhaber : **BASF Aktiengesellschaft
Carl-Bosch-Strasse 38
D-6700 Ludwigshafen (DE)**

(72) Erfinder : **Klaerner, Peter, Dr.
Hauptstrasse 62
D-6719 Battenberg (DE)**
Erfinder : **Gruber, Wolfgang, Dr.
Lorscher Ring 2 b
D-6710 Frankenthal (DE)**
Erfinder : **Gropper, Hans, Dr.
Sternstrasse 155
D-6700 Ludwigshafen (DE)**

**Beschreibung**

Die vorliegende Erfindung betrifft ein Verfahren zum kontinuierlichen Herstellen von Copolymerisaten des Ethylens mit zumindest einem $C_3$- bis $C_{12}$-, insbesondere $C_3$- bis $C_{10}$- und vor allem linearen $C_4$- bis $C_8$-$\alpha$-Monoolefin als Comonomerem (Com) durch Polymerisation eines Gemisches aus 100 Molteilen Ethylen und 3 bis 50, insbesondere 10 bis 40 Molteilen des bzw. der Comonomeren (Com) mittels eines Übergangsmetall-Katalysatorsystems bei Temperaturen von 50 bis 110, insbesondere 60 bis 100 °C, sowie Drücken von 5 bis 50, insbesondere 10 bis 50 bar, in einem gerührten Schüttgutbett aus kleinteiligem Copolymerisat, wobei man

a) die Polymerisationswärme durch Joule-Thomson-Kühlung abführt, indem man ein gegenüber dem Polymerisationsdruck um 50 bis 95, insbesondere 50 bis 80 bar, komprimierteres und gegenüber der Polymerisationstemperatur um 40 bis 130, insbesondere 50 bis 120 °C, kälteres Monomerengemisch in überschüssiger Menge in den Polymerisationsraum entspannt, derart, daß dort durch die dabei entstehende Joule-Thomson-Kälte die gewünschte Polymerisationstemperatur aufrechterhalten bleibt, und

b) die — gasförmige — nicht durch Polymerisation verbrauchte Menge des Monomerengemischs aus dem Polymerisationsraum abzieht und, unter Ersatz der durch die Polymerisation verbrauchten Menge an Monomeren durch Frischmonomere, nach Komprimierung sowie Kühlung auf die zur Joule-Thomson-Kühlung vor der Entspannung gewählten Werte des Drucks sowie der Temperatur, im Kreislauf wieder dem Polymerisationsraum zur Entspannung zuführt.

Verfahren dieser Art sind bekannt und lassen sich in der Praxis mit gutem Erfolg durchführen.

Im gegebenen Zusammenhang ist insbesondere auf die aus der US-PS-3 350 376 sowie der GB-PS-1 552 438 bekannte Verfahrensart hinzuweisen; sie kann im wesentlichen als Basis für das erfindungsgemäße Verfahren angesehen werden.

Diesem lag die Aufgabe zugrunde, die bekannte Verfahrensart so weiter auszugestalten, daß sie mit noch besserem Erfolg durchgeführt werden kann. Wesentliche Zielsetzungen hierbei waren u. a. eine Erhöhung der Zeitspanne, über die das Verfahren ohne Störung betrieben werden kann, sowie insbesondere eine Steigerung der zeitlichen Konstanz der Eigenschaften der Verfahrensprodukte, namentlich ihrer chemischen Bruttozusammensetzung.

Es wurde gefunden, daß die gestellte Aufgabe gelöst werden kann, wenn beim eingangs definierten Verfahren die Maßnahme (b) so ausgebildet wird, daß man

b1) die gasförmige, aus dem Polymerisationsraum abgezogene, nicht durch Polymerisation verbrauchte und durch die Frischmonomeren ergänzte Menge des Monomerengemisches (I) vor der neuerlichen Komprimierung soweit abkühlt, daß neben einem gasförmig verbleibenden Anteil (II) des Monomerengemisches sich ein flüssiger Anteil (III) des Monomerengemisches bildet, der einen Großteil des bzw. der Comonomeren (Com) des Monomerengemisches (I) enthält und

b2) die beiden gemäß (b1) angefallenen Anteile (II) und (III) des Monomerengemisches getrennt voneinander auf die zur Joule-Thomson-Kühlung vor der Entspannung gewählten Werte des Drucks sowie der Temperatur bringt und hierauf wieder dem Polymerisationsraum zuführt.

Gegenstand der vorliegenden Erfindung ist dementsprechend ein Verfahren zum kontinuierlichen Herstellen von Copolymerisaten des Ethylens mit zumindest einem $C_3$- bis $C_{12}$-, insbesondere $C_3$- bis $C_{10}$- und vor allem linearen $C_4$- bis $C_8$-$\alpha$-Monoolefin als Comonomerem (Com) durch Polymerisation eines Gemisches aus 100 Molteilen Ethylen und 3 bis 50, insbesondere 10 bis 40 Molteilen des bzw. der Comonomeren (Com) mittels eines Übergangsmetall-Katalysatorsystems bei Temperaturen von 50 bis 110, insbesondere 60 bis 100 °C, sowie Drücken von 5 bis 50, insbesondere 10 bis 50 bar, in einem gerührten Schüttgutbett aus kleinteiligem Copolymerisat, wobei man

a) die Polymerisationswärme durch Joule-Thomson-Kühlung abführt, indem man ein gegenüber dem Polymerisationsdruck um 50 bis 95, insbesondere 50 bis 80 bar, komprimierteres und gegenüber der Polymerisationstemperatur um 40 bis 130, insbesondere 50 bis 120 °C, kälteres Monomerengemisch in überschüssiger Menge in den Polymerisationsraum entspannt, derart, daß dort durch die dabei entstehende Joule-Thomson-Kälte die gewünschte Polymerisationstemperatur aufrechterhalten bleibt, und

b) die — gasförmige — nicht durch Polymerisation verbrauchte Menge des Monomerengemischs aus dem Polymerisationsraum abzieht und, unter Ersatz der durch die Polymerisation verbrauchten Menge an Monomeren durch Frischmonomere, nach Komprimierung sowie Kühlung auf die zur Joule-Thomson-Kühlung vor der Entspannung gewählten Werte des Drucks sowie der Temperatur, im Kreislauf wieder dem Polymerisationsraum zuführt.

Das erfindungsgemäße Verfahren ist dadurch gekennzeichnet, daß die Maßnahme (b) so ausgebildet wird, daß man

b1) die gasförmige, aus dem Polymerisationsraum abgezogene, nicht durch Polymerisation verbrauchte und durch die Frischmonomeren ergänzte Menge des Monomerengemisches (I) vor der neuerlichen Komprimierung soweit abkühlt, daß neben einem gasförmig verbleibenden Anteil (II) des Monomerengemisches sich ein flüssiger Anteil (III) des Monomerengemisches bildet, der 50 bis 80, insbesondere 50 bis 70 Molprozent des bwz. der Comonomeren (Com) des Monomerengemisches (I) enthält und

b2) die beiden gemäß (b1) angefallenen Anteile (II) und (III) des Monomerengemisches getrennt voneinander auf die zur Joule-Thomson-Kühlung vor der Entspannung gewählten Werte des Drucks sowie der Temperatur bringt und hierauf wieder dem Polymerisationsraum zuführt.

Durch dieses Kennzeichen wird die erfindungsgemäße Verbesserung der bekannten Verfahrensart bewirkt.

Zu dem erfindungsgemäßen Verfahren ist im einzelnen das Folgende zu sagen :

A) Stoffliche Seite

Das neben dem Ethylen einzusetzende Comonomer (Com) kann das einschlägig übliche sein, also z. B. Propylen oder ein höheres α-Monoolefin allein oder ein Gemisch aus Propylen mit einem oder mehreren höheren α-Monoolefinen, wie n-Buten-1, n-Hexen-1, n-Octen-1, n-Decen-1, n-Dodecen-1 oder 4-Methylpenten-1. Wie sich gezeigt hat, eignet sich das erfindungsgemäße Verfahren besonders gut zum Herstellen von binären Copolymerisaten aus Ethylen und n-Buten-1 oder n-Hexen-1 sowie ternären Copolymerisaten aus Ethylen, n-Buten-1 und n-Hexen-1. Die Polymerisate fallen in kleinteiliger Form als feinerer oder gröberer Grieß an, wobei die Teilchengröße — nicht anders als bei den einschlägig bekannten Verfahren — von den im einzelnen gewählten Verfahrensbedingungen abhängt. Es läßt sich somit sagen, daß der Teilchendurchmesser der Polymerisate im allgemeinen im Bereich von etwa 0,03 bis 10 und insbesondere etwa 0,1 bis 5 mm liegt.

Die Polymerisation selbst erfolgt mittels eines Übergangsmetall-Katalysatorsystems. Dieses kann ein einschlägig übliches sein ; es ist vorzugsweise ein Ziegler-Katalysatorsystem und insbesondere ein Ziegler-Katalysatorsystem aus einer Titan enthaltenden sowie einer Aluminium enthaltenden Katalysatorkomponente. Solche Systeme sind dem Fachmann aus Literatur und Praxis derart geläufig, daß sich an dieser Stelle eine nähere Erläuterung erübrigt. Dies gilt insbesondere auch deshalb, weil sich in Versuchsreihen herausgestellt hat, daß einerseits die für das erfindungsgemäße Verfahren spezifische Verbesserung am Verfahrensprodukt — insbesondere also die Steigerung der zeitlichen Konstanz der Eigenschaften dieser Produkte — unabhängig von der jeweils gewählten speziellen Art des Katalysatorsystems erreicht wird, und daß andererseits das jeweils eingesetzte Katalysatorsystem seine Art-spezifische Wirkung nicht anders entfaltet als bei anderen vergleichbaren Polymerisationsverfahren. Eine solche Art-spezifische Wirkung, die zudem für Copolymerisate der hier in Rede stehenden Art positiv ist, entfalten z. B. die Ziegler-Katalysatorsysteme, wie sie in den US-PS-4 110 523 bzw. 4 113 933 beschrieben sind.

Was für das Katalysatorsystem zu sagen war, gilt sinngemäß auch für gewünschtenfalls zusätzlich mit einzusetzende Molekulargewichtsregler, wie insbesondere Wasserstoff.

Insgesamt läßt sich somit sagen, daß die stoffliche Seite des erfindungsgemäßen Verfahrens als solche im Rahmen des einschlägig üblichen liegt.

B) Verfahrenstechnische Seite

Sie hat ihren tiefsten Ursprung in den Techniken zum Herstellen von Homo- oder Copolymerisaten des Ethylens in der Gasphase, wie sie zuerst bekannt geworden sind, z. B. aus der US-PS-3 254 070.

In seinem spezielleren Aspekt basiert das erfindungsgemäße Verfahren — wie eingangs bereits dargelegt — im wesentlichen auf der aus der US-PS-3 350 376 sowie der GB-PS-1 552 438 bekannten Verfahrensart, es bedarf daher auch insoweit keiner besonderer Erläuterungen.

Auf die anhängende, das erfindungsgemäße Verfahren (ohne die unterbrochene Linie (14) schematisch darstellende Figur sei deshalb lediglich des einfacheren Überblicks wegen hingewiesen :

Polymerisationsraum (1) ist ein gerührtes Schüttgutbett aus kleinteiligem Copolymerisat.

Die weitere Arbeitsweise ist so, daß man

a) die Polymerisationswärme durch Joule-Thomson-Kühlung abführt, indem man ein gegenüber dem Polymerisationsdruck komprimiertes und gegenüber der Polymerisationstemperatur kälteres Monomerengemisch in überschüssiger Menge in den Polymerisationsraum entspannt (2), derart, daß dort durch die dabei entstehende Joule-Thomson-Kälte die gewünschte Polymerisationstemperatur aufrecht erhalten bleibt, und

b) die — gasförmige — nicht durch Polymerisation verbrauchte Menge des Monomerengemisches aus dem Polymerisationsraum abzieht (3) und, unter Ersatz der durch die Polymerisation verbrauchten Menge an Monomeren durch Frischmonomere (4), nach Komprimierung sowie Kühlung auf die zur Joule-Thomson-Kühlung vor der Entspannung gewählten Werte des Drucks sowie der Temperatur, im Kreislauf wieder dem Polymerisationsraum zur Entspannung (2) zuführt.

Die erfindungsgemäße Besonderheit ist dadurch gekennzeichnet, daß die Maßnahme (b) so ausgebildet wird, daß man

b1) die gasförmige, aus dem Polymerisationsraum abgezogene, nicht durch Polymerisation verbrauchte und durch die Frischmonomeren ergänzte Menge des Monomerengemisches (I) vor der neuerlichen Komprimierung soweit abkühlt (5), daß neben einem gasförmig verbleibenden Anteil (II)/(6) des Monomerengemisches sich ein flüssiger Anteil (II)/(7) des Monomerengemisches bildet, der einen Großteil des bzw. der Comonomeren (Com) des Monomerengemisches (I) enthält und

b2) die beiden gemäß (b1) angefallenen Anteile (II)/(6) und (III)/(7) des Monomerengemisches

3

getrennt voneinander — durch Komprimierung (8) und Pumpung (9) sowie Kühlung (10) und (11) — auf die zur Joule-Thomson-Kühlung vor der Entspannung gewählten Werte des Drucks sowie der Temperatur bringt, und hierauf wieder dem Polymerisationsraum zuführt.

Es versteht sich von selbst, daß daneben eine Zufuhr (12) des Katalysatorsystems sowie gewünschtenfalls weiterer Hilfsstoffe und eine Abfuhr (13) der Copolymerisate erfolgt.

## Beispiel

Es wurde gearbeitet mit einer Vorrichtung, wie sie schematisch in der anhängenden Figur dargestellt ist.

In dieser Vorrichtung wurde — in Anwesenheit von 15 Mol % (bezogen auf das Ethylen) Wasserstoff als Molekulargewichtsregler — ein Copolymerisat des Ethylens mit n-Buten-1 als Comonomerem (Com) kontinuierlich hergestellt durch Polymerisation eines Gemisches aus 100 Molteilen Ethylen und 18 Molteilen des Comonomeren (Com) mittels eines Ziegler-Katalysatorsystems aus einer Titan enthaltenden Katalysatorkomponente, wie sie im Beispiel 5 der US-PS-4 110 523 in Spalte 8, Zeilen 25 bis 47 beschrieben ist, sowie einer Aluminium enthaltenden Katalysatorkomponente in Form von Triethylaluminium (in einer Menge von 1,2 g/h je Komponente), bei einer Temperatur von 80 °C sowie einem Druck von 20 bar, in einem gerührten Schüttgutbett (dessen Volumen 150 l, entsprechend 75 % des Nutzvolumens des Polymerisationsreaktors betrug) aus kleinteiligem Copolymerisat.

Im einzelnen wurde dabei so verfahren, daß man

a) die Polymerisationswärme durch Joule-Thomson-Kühlung abführte, indem man ein gegenüber dem Polymerisationsdruck um 60 bar komprimierteres und gegenüber der Polymerisationstemperatur um 60 °C kälteres Monomerengemisch in überschüssiger Menge (100 kg/h) in den Polymerisationsraum entspannte, derart, daß dort durch die dabei entstehende Joule-Thomson-Kälte die gewählte Polymerisationstemperatur aufrechterhalten blieb, und

b) die — gasförmige — nicht durch Polymerisation verbrauchte Menge (90 kg/h) des Monomerengemisches aus dem Polymerisationsraum abzog und, unter Ersatz der durch die Polymerisation verbrauchten Menge an Monomeren durch Frischmonomere (9,2 kg/h Ethylen sowie 0,8 kg/h n-Buten-1), nach Komprimierung sowie Kühlung auf die zur Joule-Thomson-Kühlung vor der Entspannung gewählten Werte des Drucks sowie der Temperatur, im Kreislauf wieder dem Polymerisationsraum zur Entspannung zuführte.

Erfindungsgemäß war dabei die Maßnahme (b) so ausgebildet, daß man

b1) die gasförmige, aus dem Polymerisationsraum abgezogene, nicht durch Polymerisation verbrauchte und durch die Frischmonomeren ergänzte Menge des Monomerengemisches (I) vor der neuerlichen Komprimierung soweit abkühlte (25 °C), daß neben einem gasförmig verbleibenden Anteil (II) des Monomerengemisches sich ein flüssiger Anteil (III) des Monomerengemisches bildete, der 52 Molprozent des Comonomeren (Com) des Monomerengemisches (I) enthielt, und

b2) die beiden gemäß (b1) angefallenen Anteile (II) und (III) des Monomerengemisches getrennt voneinander auf die zur Joule-Thomson-Kühlung vor der Entspannung gewählten Werte der Temperatur (20 °C) sowie des Drucks (80 bar) brachte, und hierauf wieder dem Polymerisationsraum zuführte.

Zusätzlich zu diesen Maßnahmen wurde fortlaufend die Konzentration des Comonomeren (Com) im Schüttgutbett gemessen und die Abweichung von der Soll-Konzentration (18 Molteile des Comonomeren auf 100 Molteile Ethylen) ermittelt. Dabei zeigte sich, daß diese Abweichung innerhalb von 5 Stunden nach oben und unten maximal 1 Molteil des Comonomeren auf 100 Molteile Ethylen betrug.

Entsprechend gut war die zeitliche Konstanz der Eigenschaften des Copolymerisats (Ausbeute : 10 kg/h), namentlich auch seiner chemischen Bruttozusammensetzung.

## Vergleichsversuch

Es wurde in Identität mit dem Beispiel gearbeitet, mit der einzigen Ausnahme, daß die erfindungsgemäße Besonderheit nicht angewandt wurde ; — d. h. daß ohne die Aufteilung der Maßnahme (b) in die Untermaßnahmen (b1) und (b2) gearbeitet wurde. Diese Arbeitsweise ist in der anhängenden Figur veranschaulicht durch die unterbrochene Linie (14) bei Wegfall der Elemente (5), (6), (7), (9) und (11) ; — was im Vergleichsversuch einem einfachen Umgang unter Ausblenden der genannten Elemente entsprach.

Hierbei ergaben die Messungen im Schüttgutbett innerhalb von 5 Stunden wiederholte Abweichungen vom Soll-Wert, und zwar nach oben und unten bis zu 5 Molteile des Comonomeren auf 100 Molteile Ethylen.

Die zeitliche Konstanz der Eigenschaften des so erhaltenen Copolymerisats, namentlich seiner chemischen Bruttozusammensetzung, war entsprechend deutlich schlechter als bei den Copolymerisaten aus dem Beispiel.

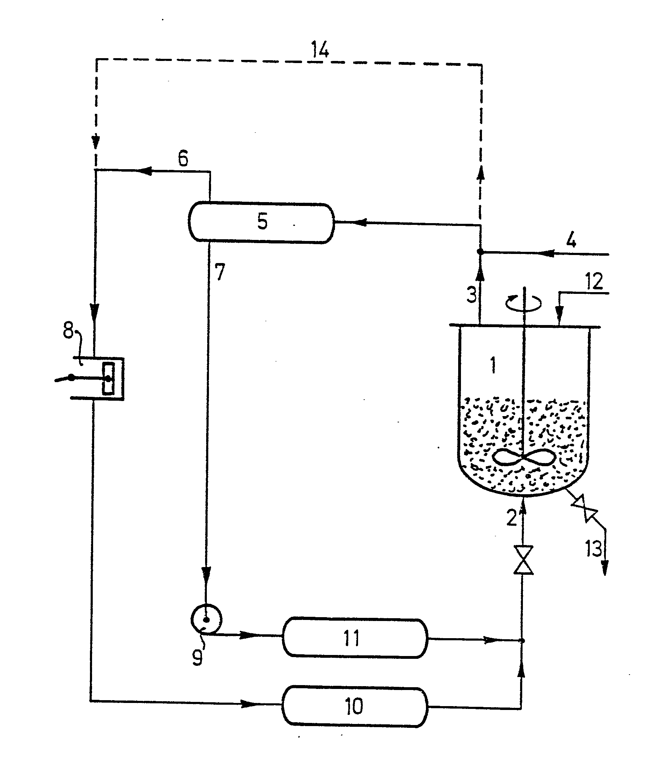

**Patentanspruch**

Verfahren zum kontinuierlichen Herstellen von Copolymerisaten des Ethylens mit zumindest einem

---

0 110 087

C$_3$- bis C$_{12}$-$\alpha$-Monoolefin als Comomerem (Com) durch Polymerisation eines Gemisches aus 100 Molteilen Ethylen und 3 bis 50 Molteilen des bzw. der Comonomeren (Com) mittels eines Übergangsmetall-Katalysatorsystems bei Temperaturen von 50 bis 110 °C sowie Drücken von 5 bis 50 bar, in einem gerührten Schüttgutbett aus kleinteiligem Copolymerisat, wobei man

a) die Polymerisationswärme durch Joule-Thomson-Kühlung abführt, indem man ein gegenüber dem Polymerisationsdruck um 50 bis 95 bar komprimierteres und gegenüber der Polymerisationstemperatur um 40 bis 130 °C kälteres Monomerengemisch in überschüssiger Menge in den Polymerisationsraum entspannt, derart, daß dort durch die dabei entstehende Joule-Thomson-Kälte die gewünschte Polymerisationstemperatur aufrechterhalten bleibt, und

b) die — gasförmige — nicht durch Polymerisation verbrauchte Menge des Monomerengemischs aus dem Polymerisationsraum abzieht und, unter Ersatz der durch die Polymerisation verbrauchten Menge an Monomeren durch Frischmonomere, nach Komprimierung sowie Kühlung auf die zur Joule-Thomson-Kühlung vor der Entspannung gewählten Werte des Drucks sowie der Temperatur, im Kreislauf wieder dem Polymerisationsraum zur Entspannung zuführt, dadurch gekennzeichnet, daß die Maßnahme (b) so ausgebildet wird, daß man

b1) die gasförmige, aus dem Polymerisationsraum abgezogene, nicht durch Polymerisation verbrauchte und durch die Frischmonomeren ergänzte Menge des Monomerengemischs (I) vor der neuerlichen Komprimierung soweit abkühlt, daß neben einem gasförmig verbleibenden Anteil (II) des Monomerengemischs sich ein flüssiger Anteil (III) des Monomerengemischs bildet, der 50 bis 80 Molprozent des bzw. der Comonomeren (Com) des Monomerengemischs (I) enthält und

b2) die beiden gemäß (b1) angefallenen Anteile (II) und (III) des Monomerengemischs getrennt voneinander auf die zur Joule-Thomson-Kühlung vor der Entspannung gewählten Werte des Drucks sowie der Temperatur bringt, und hierauf wieder dem Polymerisationsraum zuführt.

## Claim

A process for the continuous production of copolymers of ethylene with at least one $\alpha$-monoolefin of 3 to 12 carbon atoms, as comonomer, by polymerizing a mixture of 100 molar parts of ethylene and 3 to 50 molar parts of the comonomer, using a transition metal catalyst system, at a temperature of from 50 to 110 °C and a pressure of 5 to 50 bars, in a stirred bed of particulate copolymer,

a) the heat of polymerization being removed by Joule-Thomson cooling by flashing an excess of a monomer mixture, which has been compressed to a pressure that is 50 to 95 bars higher than the polymerization pressure, and is at a temperature that is 40 to 130 °C lower than the polymerization temperature, into the polymerization zone in such a way that the desired polymerization temperature therein is maintained by the resulting Joule-Thomson cold, and

b) the amount of monomer mixture not consumed in the polymerization, which is gaseous, being removed from the polymerization zone and — while adding fresh monomer to make up for the amount of monomer consumed in the polymerization — recycled to the polymerization zone for flashing after it has been brought by compression and cooling to the pressure and temperature selected, prior to flashing, for Joule-Thomson cooling, wherein step (b) is so conducted that

b$_1$) the amount of gaseous monomer mixture (I) withdrawn from the polymerization zone and not consumed in the polymerization, which has been supplemented by fresh monomer, is cooled, prior to renewed compression, to such an extend that there is formed, in addition to a gaseous portion (II) of the monomer mixture, a liquid portion (III) which contains 50 to 80 mole % of the comonomer in the monomer mixture (I),

b$_2$) the two portions (II) and (III) of the monomer mixture, formed in step (b$_1$), are separately brought by compression and cooling to the pressure and temperature selected, prior to flashing, for Joule-Thomson cooling, and then recycled to the polymerization zone.

## Revendication

Procédé de préparation en continu de copolymères de l'éthylène et d'au moins une $\alpha$-mono-oléfine en C$_3$ à C$_{12}$ comme comonomère par polymérisation d'un mélange composé de 100 parties molaires d'éthylène et de 3 à 50 parties molaires du ou des comonomères dans un lit en vrac de fines particules du copolymère, maintenu en agitation, à des températures de 50 à 110 °C et sous des pressions de 5 à 50 bars en présence d'un système catalytique à métal de transition, dans lequel :

a) la chaleur de polymérisation est évacuée par un refroidissement selon Joule-Thomson, réalisé en détendant dans l'enceinte de polymérisation un mélange des monomères comprimé à une pression supérieure de 50 à 95 bars à la pression de polymérisation et refroidi à une température inférieure de 40 à 130 °C à la température de polymérisation en un excès tel que dans l'enceinte est maintenue, par le froid Joule-Thomson créé, la température de polymérisation voulue ;

b) la fraction du mélange des monomères non consommée par la polymérisation est soutirée à l'état gazeux de l'enceinte de polymérisation et, après compensation des quantités de monomères consommées par la polymérisation par des monomères frais, comprimée et refroidie à la température et à la pression choisies pour le refroidissement par détente selon Joule-Thomson, puis recyclée dans l'enceinte de polymérisation pour la détente,

caractérisé en ce que la mesure (b) est réalisée comme suit :

b1) le mélange des monomères (I), formé de la fraction des monomères non consommée par la polymérisation, soutirée à l'état gazeux de l'enceinte de polymérisation, et des monomères frais est, avant la recompression, refroidi jusqu'à la formation, à côté d'une fraction des monomères restant à l'état gazeux (II) du mélange de monomères, d'une fraction liquide (III) du mélange de monomères, qui contient entre 50 et 80 % molaires du ou des comonomères du mélange de monomères (I) et

b2) les deux fractions (II) et (III) du mélange des monomères, obtenues sub (b1), sont amenées séparément à la pression et à la température choisies pour le refroidissement par détente selon Joule-Thomson, puis introduites dans l'enceinte de polymérisation.